# EUROPÄISCHE PATENTSCHRIFT

(11) **EP 3 251 281 B1**
(45) Veröffentlichungstag und Bekanntmachung des Hinweises auf die Patenterteilung: **08.07.2020**
(21) Anmeldenummer: 16702389.4
(22) Anmeldetag: 28.01.2016
(51) Int. Cl.: H04L 9/06, H04L 9/00, G06F 21/12, G09C 1/00

(54) **INTRINSISCHE AUTHENTIFIZIERUNG VON PROGRAMCODE**
INTRINSIC AUTHENTICATION OF PROGRAM CODE
AUTHENTIFICATION INTRINSÈQUE D'UN CODE DE PROGRAMME

(30) Priorität: 28.01.2015 DE 102015201430
(43) Veröffentlichungstag der Anmeldung: 06.12.2017
(73) Patentinhaber: IHP GmbH-Innovations for High Performance Microelectronics / Leibniz-Institut für innovative Mikroelektronik, 15236 Frankfurt / Oder (DE)
(72) Erfinder: STECKLINA, Oliver, 03046 Cottbus (DE); LANGENDÖRFER, Peter, 15234 Frankfurt (Oder) (DE)
(74) Vertreter: Eisenführ Speiser
(86) Internationale Anmeldenummer: PCT/EP2016/051756
(87) Internationale Veröffentlichungsnummer: WO 2016/120362

(56) Entgegenhaltungen:
- US-A- 4 562 305
- US-A1- 2008 263 366
- US-A1- 2010 153 745
- FREDERIK ARMKNECHT ET AL: "A security framework for the analysis and design of software attestation", COMPUTER & COMMUNICATIONS SECURITY, ACM, 2 PENN PLAZA, SUITE 701 NEW YORK NY 10121-0701 USA, 4. November 2013 (2013-11-04), Seiten 1-12, XP058034026, DOI: 10.1145/2508859.2516650 ISBN: 978-1-4503-2477-9

## Beschreibung

Mit der zunehmenden Bedeutung und der allgemeinen Erreichbarkeit von eingebetteten Systemen wächst auch das Bedürfnis an Sicherheit und Zuverlässigkeit für derartige Systeme. Eingebettete Systeme nutzen Mikrocontroller mit niedriger Leistungsaufnahme, die auch als Low-Power Mikrocontroller bezeichnet werden.

Aktuell verfügbare und eingesetzte Low-Power Mikrocontroller verwenden eine einfache von-Neumann- oder Harvard-Architektur mit einem einzigen Adressraum. Mechanismen für die Implementierung von insbesondere sicheren, aber auch zuverlässigen Systemen sind bei dieser Klasse von Mikrocontrollern im Wesentlichen nicht vorhanden.

US 2010/153745 A1 beschreibt ein Verfahren zum Verschlüsseln von kompilierten Computer-Code-Anweisungen, die durch Befehl während der Ausführung zu entschlüsseln sind. Die Computercodeanweisungen werden unter Verwendung eines Verkettungsmodus verschlüsselt, so dass ein verschlüsselter Befehl von den Werten des Befehls, dem Wert des vorhergehenden Befehls und einer Pseudozufallszahl abhängt. Da es passieren kann, dass der Befehl von mehr als einem vorhergehenden Befehl erhalten werden kann, ist mindestens einer der vorhergehenden Befehle einem Zufallszahlkompensator zur Verwendung während der Entschlüsselung des verschlüsselten Befehls zugeordnet, so dass die Entschlüsselung des verschlüsselten Befehls in dem gleichen Ergebnis resultiert, unabhängig davon, um welche Anweisung es sich handelt. Auch zur Verfügung gestellt werden eine Verschlüsselungsvorrichtung, eine Entschlüsselungsvorrichtung und ein Verfahren und ein digitales Unterstützungsmedium, das verschlüsselte kompilierte Computercodeanweisungen speichert.

US 2008/0263366 A1 beschreibt ein Programm, das modifiziert wird, um zusätzlichen Schutzcode zu enthalten, einschließlich eines Schutzcode-Launchers, der mit dem Programm gestartet wird. Entschlüsselungs- und Ausführungscode wird auch für das Schutzcode-Startprogramm und einen oder mehrere Codebausteine des Programms bereitgestellt. Ein gegebener Codeblock wird unter Verwendung eines Schlüssels verschlüsselt, der auf einem vorhergehenden Codeblock basiert, und der vorherige Codeblock wird unter Verwendung eines Schlüssels verschlüsselt, der auf einem weiteren vorhergehenden Codeblock basiert, und so weiter. Wenn ein Hacker das Programm ändert, um beispielsweise eine Nachricht zu vermeiden, die den Benutzer dazu verpflichtet, das Programm zu kaufen, wird das Programm deaktiviert. Das Programm kann auch auf der Basis von Computerhardware wie einer Festplatten-Seriennummer verschlüsselt wer-den, so dass es nur auf einem bestimmten Computer arbeitet.

US 4,278,837 beschreibt einen Krypto-Mikroprozessor, bei dem Programmcode verschlüsselt im Speicher abgelegt und bei der Ausführung blockweise mit Hilfe eines in einem Speicher abgelegten Schlüssels entschlüsselt wird. Der Schlüssel wird vor einer Abgabe des Krypto-Mikroprozessors an Nutzer eingespeichert. Ein für jede Blockadresse individueller Schlüssel wird durch eine XOR-Verknüpfung des abgespeicherten Schlüssels mit der jeweiligen Blockadresse erzeugt (Spalte 8, Zeilen 3ff).

Diese Architektur wurde von Dallas als DS5002FP umgesetzt. Der Prozessor nutzt drei Funktionen ED, EA und ED-1, wobei ED ein 8-bit Data Encryption, EA ein 17-bit Address Encryption und ED-1 ein 8-bit Data Decryption bezeichnet. Die Operationen werden wie folgt verschlüsselt d' = EDa,K(d), wobei a die Adresse und K der Masterkey (48-bit) ist. Die Daten werden dann an die Adresse a' = EAK(a) abgelegt. Der Schlüssel wird in einem batteriegepufferten RAM abgelegt. Im Tamper-Fall wird dieser gelöscht.

Als Return-to-libc wird eine Methode zum Angriff auf Computer bezeichnet, mit der der Computer von einem Angreifer beispielsweise zur Ausführung eines unerwünschten Programmablaufs ausgenutzt werden kann. Bei return-to-libc Angriffen wird eine Manipulation des Programmstacks eines Prozessors vorgenommen. Der Programmstack verwaltet unter anderem Rücksprungadressen aus Unterprogrammen. Durch die Manipulation des Programmstacks kann ein veränderter Programmablauf erzeugt werden, der statt des normalen Ablaufs gemäß einem dem auszuführenden Programmcode zugrundeliegenden erwünschten Programmablaufplan eine Ausführung einer von einem Angreifer gewünschten Instruktions-Sequenz ermöglicht. Da für diesen Angriff kein Fremd-Code, sondern lediglich bereits auf dem Prozessor vorhandener Programmcode verwendet wird, sind die meisten gängigen Schutzmaßnahmen unzureichend.

Das oben genannte Problem wird durch die Merkmale der unabhängigen Ansprüche gelöst.

Gemäß einem ersten Aspekt der vorliegenden Erfindung wird ein Krypto-Prozessor vorgeschlagen, umfassend
- einen Prozessorkern zum Empfang und zur Ausführung von Instruktionen eines Programmcodes, dem ein Programmablaufplan zugrundeliegt;
- eine Programmspeichereinheit, die den Programmcode mit Instruktionen in einzeln verschlüsselter Form speichert, wobei die Instruktionen jeweils mindestens ein Instruktionsdatenwort und einen der jeweiligen Instruktion zugeordneten Instruktions-Datenschlüssel enthalten und eine jeweilige Instruktion unter Verwendung eines Programm-Datenschlüssels und des Instruktions-Datenschlüssels einer jeweiligen Vorgängerinstruktion verschlüsselt ist, welche gemäß dem Programmablaufplan unmittelbar vorher auszuführen ist, und wobei nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind; und
- eine Entschlüsselungseinheit, die ausgebildet ist, von der Programmspeichereinheit her die verschlüsselten Instruktionen zu empfangen und eine jeweilige empfangene verschlüsselte Instruktion unter Verwendung des Programm-Datenschlüssels und des Instruktions-Datenschlüssels der betreffenden Vorgängerinstruktion zu entschlüsseln, das aktuell entschlüsselte mindestens eine Instruktionsdatenwort der Instruktion dem Prozessorkern zur Ausführung zuzuführen sowie den so aktuell entschlüsselten Instruktions-Datenschlüssel zur Verwendung bei der Entschlüsselung der unmittelbar nächsten empfangenen verschlüsselten Instruktion vorzuhalten.

Bei dem Krypto-Prozessor der vorliegenden Erfindung sind die einzelnen Instruktionen des Programmcodes derart verschlüsselt, dass eine Instruktion nur dann vom Prozessorkern verwendet werden kann, wenn die ihr vorangestellte Instruktion, hier als Vorgänger-instruktion bezeichnet, unmittelbar zuvor ausgeführt wurde. Dies erfordert erfindungsgemäß, dass die Vorgängerinstruktion zunächst entschlüsselt wurde und damit der in ihr enthaltene Instruktions-Datenschlüssel zur Entschlüsselung der aktuellen Instruktion bereitsteht.

Diese kryptographische Verknüpfung der Instruktionen erzeugt eine Abhängigkeit, die dem Prozessorkern eine intrinsische Fähigkeit zur Nachprüfung der korrekten Ausführungsreihenfolge der Instruktionen gemäß dem erwünschten Programmablaufplan, der dem Programmcode zugrundeliegt, verleiht. Denn die Instruktion n + 1 gemäß Programmablaufplan kann nur dann ausgeführt werden, wenn zuvor die Instruktion n gemäß Programmablaufplan ausgeführt wurde. Beim Verlassen des vorgegebenen Programmablaufplans werden dem Prozessorkern zwangsläufig fehlerhaft entschlüsselte Instruktionen übergeben, die der nicht interpretieren und somit zwangsläufig nicht ausführen kann. Diese kryptographische Verknüpfung der Instruktionen erzeugt eine Abhängigkeit, die eine Nachprüfbarkeit der korrekten Reihenfolge der Programminstruktionen als intrinsische Eigenschaft des Prozessorkerns erzielt. Das so implementierte Konzept wird daher auch als intrinsische Code-Authentifizierung und auf Englisch als intrinsic code attestation (ICA) bezeichnet. Es wird also zur Abwehr der einführend erwähnten return-to-libc Angriffe mittels der ICA sichergestellt, dass der durch den Programmablaufplan definierte und den Programmcode implementierte Programmpfad bei seiner Ausführung nicht verlassen werden kann.

Nachfolgend werden beispielhafte Ausführungsformen des Krypto-Prozessors beschrieben.

Die Entschlüsselungseinheit ist in einer Ausführungsform ausgebildet, die aktuell entschlüsselte Instruktion, das heißt das mindestens eine entschlüsselte Instruktionsdatenwort, dem Prozessorkern einzeln zur Ausführung bereitzustellen und eine nächste Instruktion erst dann zu entschlüsseln, nachdem die Ausführung der unmittelbar vorangehend bereitgestellten Instruktion durch den Prozessorkern begonnen hat. Damit wird erreicht, dass Instruktionen erst unmittelbar bevor sie vom Prozessorkern ausgeführt werden entschlüsselt werden. Es wird immer also nur die gerade aktuelle Instruktion entschlüsselt und ausgeführt. Damit wird erreicht, dass Klartextinformation im Prozessorkern nur in möglichst geringem Umfang vorhanden ist.

Vorzugsweise ist der jeweilige Instruktions-Datenschlüssel ein der Instruktion zugeordneter Nonce.

Bei dem Nonce handelt es sich bevorzugt um einen zufälligen Wert. Die Nonces haben damit insbesondere keine Relation zur Adresse der Instruktion, so dass eine Vorhersage des Instruktions-Datenschlüssels ohne die Kenntnis des Schlüssels nicht möglich ist. In einer 16-bit Prozessorarchitektur ist ein 16-bit-Nonce ausreichend, da hiermit jeder Adresse ein anderer Nonce zugewiesen werden kann.

Für die Verschlüsselung der Instruktionen ist ein Verfahren vorteilhaft, welches der Entschlüsselungseinheit eine Entschlüsselung der Instruktionen in gleicher Geschwindigkeit zur Verarbeitungsgeschwindigkeit des Prozessorkerns ermöglicht. In einer Ausführungsform ist zu diesem Zweck die jeweilige Instruktion unter Verwendung des Programm-Datenschlüssels und des jeweiligen Instruktions-Datenschlüssels durch eine verschlüsselungsseitige Chiffre (mit gleicher Bedeutung auch als Cipher bezeichnet), die vorzugsweise symmetrisch ist, blockverschlüsselt. Die Entschlüsselungseinheit weist in dieser Ausführungsform eine Blockentschlüsselungsstufe mit einer entschlüsselungsseitigen symmetrischen Chiffre auf, die ausgebildet ist, zum einen den Programm-Datenschlüssel und zum anderen den jeweiligen Instruktions-Datenschlüssel der Vorgängerinstruktion zu empfangen und damit einen Zwischen-Datenschlüssel zur Entschlüsselung der aktuell zu entschlüsselnden Instruktion bereitzustellen.

Bei Nutzung der Blockverschlüsselung ist in manchen Ausführungsformen eine der Blockverschlüsselung zugrundeliegende Blocklänge nicht mit der Gesamtlänge des Instruktions-Datenworts und des Instruktions-Datenschlüssels identisch. Jedoch ist vorzugsweise stets der Instruktions-Datenschlüssel als solcher kürzer als die Blockgröße der Chiffre. Bei solchen Ausführungsformen weist die Entschlüsselungseinheit vorzugsweise eine Paddingstufe auf, die ausgebildet ist, den jeweils empfangenen Instruktions-Datenschlüssel, welcher eine geringere Länge als die Blocklänge der Chiffre hat, mittels eines vorbestimmten Padding-Codes auf die Blocklänge der Chiffre zu erweitern.

Die Blockgröße der Chiffre ist in einigen Ausführungsformen kleiner als die Gesamtlänge einer Instruktion, also von Instruktions-Datenwort und Instruktions-Datenschlüssel. In diesem Fall wird der Zwischenschlüssel von der Chiffre durch Bereitstellung mehrerer Blöcke hintereinander erstellt, um im Ergebnis die benötigte Länge des Zwischenschlüssels zur Entschlüsselung zu erzeugen. In solchen Ausführungsformen sind die Instruktionen vorzugsweise jeweils in einem Counter-Betriebsmodus unter wiederholter Verwendung des Instruktions-Datenschlüssels und unter Verwendung eines vorbestimmten Padding-Codes stromverschlüsselt. Die Entschlüsselungseinheit weist vorzugsweise zusätzlich eine Paddingstufe auf, die ausgebildet ist, einen empfangenen Instruktions-Datenschlüssel jeweils mittels des vorbestimmten Padding-Codes auf die Blocklänge zu erweitern. Der Padding-Code ist in solchen Varianten vorzugsweise block-individuell. In einer solchen Variante werden der Chiffre zur Erstellung des Zwischenschlüssels im ersten Block der Instruktions-Datenschlüssel und ein daran anzuhängender vorbestimmter Padding-Code zugeführt, und im nachfolgenden Block erneut der Instruktions-Datenschlüssel und ein Padding-Code, der gegenüber dem des vorangehenden Blocks inkrementiert ist.

In anderen Varianten ist der Padding-Code instruktions-individuell. Dann wird beispielsweise eine Instruktionsadresse oder ein Teil davon als Padding-Code verwendet. Alternativ ist der Padding-Code stets gleich, beispielsweise in Form einer vorbestimmten Bitfolge.

In Ausführungsformen, in denen die Blocklänge größer ist als die Gesamtlänge einer Instruktion, also des mindestens einen Instruktionsdatenworts und des Instruktions-Datenschlüssels, ist keine besondere Behandlung notwendig.

Die Entschlüsselungseinheit weist in Ausführungsformen, die eine Blockverschlüsselung verwenden, typischerweise eine Additionsstufe auf, die ausgebildet ist, den Zwischen-Datenschlüssel und die zu entschlüsselnde Instruktion in binärer Form zu empfangen und zu addieren und unter Verwendung des Ergebnisses der Addition das mindestens eine Instruktionsdatenwort und den Instruktions-Datenschlüssel in entschlüsselter Form bereitzustellen. Mit anderen Worten werden die der Gesamtlänge der Instruktion entsprechenden Bits des mit der Chiffre erzeugten Zwischen-Datenschlüssels mit der zu entschlüsselnden Instruktion einer XOR-Operation unterzogen, um entschlüsselten Klartext zu erzeugen.

Die Verschlüsselung der Instruktionen kann extern vor dem Einspielen des Programmcodes in den Krypto-Prozessor vorgenommen werden. Hierzu wird beispielswese eine zum Krypto-Prozessor externe Verschlüsselungseinheit verwendet, wie sie weiter unten als zweiter Aspekt der vorliegenden Erfindung beschrieben ist. Der Krypto-Prozessor benötigt bei dieser Vorgehensweise keine interne Verschlüsselungseinheit.

Alternativ kann eine solche Verschlüsselungseinheit aber auch in den Krypto-Prozessor integriert sein. Solche Ausführungsformen lassen zu, dass der Programmcode zunächst in Klartext empfangen wird, bevor er im Programmspeicher in verschlüsselter Form abgelegt wird. Die erforderliche Analyse des Programmauflaufplans, bei der der Binärcode nach Sprungbefehlen durchsucht wird und an den Sprungzielen die Instruktions-Datenschlüssel aller möglichen Vorgänger-Instruktionen eingetragen wird, erfordert eine hohe Rechenkapazität, die eingebettete Systemen derzeit meist noch nicht bieten können. Daher wird für Krypto-Prozessoren in Form eingebetteter Systeme die Zuordnung der Instruktions-Datenschlüssel vorzugsweise extern vorgenommen. Die Klartext-Instruktionen werden in solchen Ausführungsformen vorzugsweise in Form unverschlüsselter Instruktionsdatenwörter zusammen mit dem jeweiligen Instruktions-Datenschlüssel empfangen und der Verschlüsselungseinheit zugeführt. In einer solchen Ausführungsform weist der Krypto-Prozessor eine Verschlüsselungseinheit auf, die ausgebildet ist, die Instruktionen in unverschlüsselter zu empfangen, die jeweils das mindestens eine Instruktionsdatenwort und den der jeweiligen Instruktion zugeordneten Instruktions-Datenschlüssel aufweisen. Bei dem in diesem Fall zugeordneten Instruktions-Datenschlüssel handelt es sich, wie oben erläutert, um den Instruktions-Datenschlüssel der jeweiligen Vorgängerinstruktion, welche gemäß dem Programmablaufplan unmittelbar vorher auszuführen ist, wobei nur in dem Fall, dass eine betreffende Instruktion im Programmablaufplan eine Mehrzahl möglicher Vorgängerinstruktionen hat, den betreffenden möglichen Vorgängerinstruktionen denselben Instruktions-Datenschlüssel zugeordnet ist, die jeweiligen Instruktions-Datenschlüssel ansonsten aber instruktions-individuell sind. Die Verschlüsselungseinheit ist weiterhin ausgebildet, eine jeweilige Instruktion unter Verwendung des Programm-Datenschlüssels und des zugeordneten Instruktions-Datenschlüssels zu verschlüsseln .In einer Variante dieser Ausführungsform ist die Verschlüsselungseinheit ausgebildet, die empfangenen Instruktions-Datenschlüssel der Instruktionen nach einer vorbestimmen Rechenvorschrift zu verändern, um einen Angriff zu erschweren.

Bei anderen Ausführungsformen des Krypto-Prozessors ist die Verschlüsselungseinheit zusätzlich ausgebildet, den Programmauflaufplan zu analysieren und dazu empfangenen unverschlüsselter Binär-Programmcode, der die Instruktionsdatenwörter enthält, nach Sprungbefehlen zu durchsuchen, Sprungziel-Instruktionen zu ermitteln und den Sprungziel-Instruktionen die Instruktions-Datenschlüssel aller möglichen Vorgänger-Instruktionen zuzuordnen. Solche Krypto-Prozessoren höherer Leistungsfähigkeit können so in die Lage versetzt werden, auch die Zuordnung der Instruktions-Datenschlüssel intern vorzunehmen.

Diese Ausführungsform eignet sich insbesondere für solche Krypto-Prozessoren, die im Vergleich mit typischen eingebetteten Prozessorsystemen nach dem aktuellen Stand der Technik eine höhere Rechenleistung bereitstellen können.

In Ausführungsformen mit Verwendung der Blockverschlüsselung weist auch die Verschlüsselungseinheit vorzugsweise eine Blockverschlüsselungseinheit mit einer verschlüsselungsseitigen symmetrischen Chiffre auf, welche ausgebildet ist, unverschlüsselten Programmcode in Form von Instruktionen zu empfangen und die Instruktionen individuell unter Verwendung des Programm-Datenschlüssels und des jeweiligen Instruktions-Datenschlüssels zu verschlüsseln. Vorteilhafterweise weist die Verschlüsselungseinheit vorzugsweise zusätzlich eine Paddingstufe auf, die ausgebildet ist, den jeweils empfangenen Instruktions-Datenschlüssel mittels eines vorbestimmten Padding-Codes auf die Blocklänge zu erweitern. In einer Ausführungsform, bei der die Gesamtlänge der Instruktion größer ist als die Blockgröße der Chiffre, ist die Blockverschlüsselungseinheit ausgebildet, die Instruktionen jeweils in einem Counter-Betriebsmodus stromverschlüsselt zu verschlüsseln, und hierfür unter Verwendung des Programm-Datenschlüssels, des jeweiligen Instruktions-Datenschlüssels der Vorgängerinstruktion gemäß dem Programmablaufplan sowie unter Verwendung des Padding-Codes einen Zwischen-Datenschlüssel zu erzeugen. Der Padding-Code wird in einer Variante block-individuell erzeugt.

Bei dem Krypto-Prozessor ist die Entschlüsselungseinheit als Hardwareeinheit vorzugsweise unumgehbar in einem Datenpfad zwischen der Programmspeichereinheit und dem Prozessorkern angeordnet. Die Entschlüsselungseinheit wird insbesondere hardwaremäßig fest in den Datenpfad Krypto-Prozessors integriert. Damit wird sichergestellt, dass die Entschlüsselungseinheit nicht umgangen werden kann und der Prozessorkern nur in der Programmspeichereinheit abgelegte verschlüsselte Instruktionen, die zunächst von der Entschlüsselungseinheit entschlüsselt werden, ausführen kann.

Der Programm-Datenschlüssel und die Statusinformationen sind vorzugsweise innerhalb der Entschlüsselungseinheit gespeichert. Diese Statusinformationen enthalten zum Beispiel den Counter für den Counter-Mode oder den errechneten Zwischen-Datenschlüssel. Ein Auslesen oder Verändern dieser Informationen ist gesondert gesichert.

Zur Sicherung dieser Daten sind verschiedene Varianten möglich. In einer Variante weist der Krypto-Prozessor beispielsweise einen nicht-klonbaren integrierten Schaltungsteil auf, welcher messbare, zeitlich konstante und zufällige Parameterwerte definiert. Datenwerte des Programm-Datenschlüssels hängen bei dieser Variante von den zufälligen Parameterwerten des nicht-klonbaren integrierten Schaltungsteils ab. Zum Abruf des Programm-Datenschlüssels weist die Krypto-Prozessor in einer Implementierung dieser Variante eine Messeinheit auf, die ausgebildet ist, die genannten Parameterwerte des integrierten Schaltungsteils zu erfassen und in Form digitaler Parameterwerte als den Programm-Datenschlüssel bereitzustellen. Die Nutzung anderer, für sich genommen bekannter Lösungen zur Sicherung der Schlüsseldaten ist möglich.

Gemäß einem zweiten Aspekt der Erfindung wird eine Verschlüsselungseinheit für Instruktionen eines Programmcodes bereitgestellt, dem ein Programmablaufplan zugrundeliegt. Die Verschlüsselungseinheit ist ausgebildet,
- empfangene Instruktionen, die jeweils mindestens ein Instruktionsdatenwort aufweisen, um einen der jeweiligen Instruktion zuzuordnenden Instruktions-Datenschlüssel zu ergänzen,
- eine jeweilige Instruktion unter Verwendung des Programm-Datenschlüssels und des Instruktions-Datenschlüssels der jeweiligen Vorgängerinstruktion zu verschlüsseln, welche gemäß dem Programmablaufplan unmittelbar vorher auszuführen ist, und
- nur in dem Fall, dass eine betreffende Instruktion im Programmablaufplan eine Mehrzahl möglicher Vorgängerinstruktionen hat, den betreffenden möglichen Vorgängerinstruktionen denselben Instruktions-Datenschlüssel zuzuordnen, wobei die jeweiligen Instruktions-Datenschlüssel ansonsten aber instruktions-individuell sind.

Die Verschlüsselungseinheit des zweiten Aspekts der vorliegenden Erfindung teilt den Grundgedanken des Krypto-Prozessors des ersten Aspekts der Erfindung. Sie bildet in manchen Ausführungsformen eine vom hier beschriebenen Krypto-Prozessor separate Hardware-Einheit und ermöglicht es so, Krypto-Prozessoren des ersten Aspekts der Erfindung ohne integrierte Verschlüsselungseinheit zu implementieren. Wie bereits oben erläutert, ist die Verschlüsselungseinheit in andere Ausführungsformen des Krypto-Prozessors integriert.

Die Verschlüsselungseinheit des zweiten Aspekts ermöglicht es, wie bereits oben ausführlich erläutert, die einzelnen Instruktionen des Programmcodes derart zu verschlüsseln, dass eine Instruktion nur dann vom Prozessorkern des Krypto-Prozessors verwendet werden kann, wenn die ihr vorangestellte Instruktion, hier als Vorgängerinstruktion bezeichnet, unmittelbar zuvor ausgeführt wurde. Dies erfordert erfindungsgemäß, dass die Vorgängerinstruktion zunächst entschlüsselt wurde und damit der in ihr enthaltene Instruktions-Datenschlüssel zur Entschlüsselung der aktuellen Instruktion bereitsteht. Die Verschlüsselungseinheit ermöglicht also die Umsetzung des oben erläuterten Konzepts der intrinsischen Code-Authentifizierung, indem durch die erfindungsgemäß implementierte Verschlüsselung zur Abwehr der einführend erwähnten return-to-libc Angriffe sichergestellt ist, dass der durch den Programmablaufplan definierte und den Programmcode implementierte Programmpfad bei seiner Ausführung durch den Krypto-Prozessor nicht verlassen werden kann.

In einer Ausführungsform der Verschlüsselungseinheit weist diese eine Blockverschlüsselungseinheit mit einer symmetrischen Chiffre auf, welche ausgebildet ist, unverschlüsselten Programmcode in Form von Instruktionen zu empfangen und die Instruktionen individuell unter Verwendung des Programm-Datenschlüssels und des jeweiligen Instruktions-Datenschlüssels zu verschlüsseln.. Vorzugsweise weist die Verschlüsselungseinheit eine Paddingstufe auf, die ausgebildet ist, den jeweils empfangenen Instruktions-Datenschlüssel, welcher sinnvollerweise, jedoch nicht zwingend notwendig eine geringere Länge als die Blocklänge der Chiffre hat, mittels eines vorbestimmten Padding-Codes auf die Blocklänge der Chiffre zu erweitern.

In Ausführungsformen, bei denen die Instruktionslänge, also die Gesamtlänge von Instruktionsdatenwort und Instruktions-Datenschlüssel länger ist als die Blocklänge., ist die Blockverschlüsselungseinheit vorteilhafterweise ausgebildet, die Instruktionen jeweils in einem oben im Zusammenhang der Entschlüsselung bereits erläuterten Counter-Betriebsmodus stromverschlüsselt zu verschlüsseln und hierfür unter Verwendung des Programm-Datenschlüssels, des jeweiligen Instruktions-Datenschlüssels der Vorgänger-instruktion gemäß dem Programmablaufplan sowie unter Verwendung des Padding-Codes einen Zwischen-Datenschlüssel zu erzeugen.

Dieser mit den erwähnten Ausnahmen grundsätzlich instruktionsindividuelle Zwischen-Datenschlüssel wird dann zur Verschlüsselung der Instruktionen verwendet.

Gemäß einem dritten Aspekt der Erfindung wird eine Entschlüsselungseinheit bereitgestellt, für unter Verwendung einer Verschlüsselungseinheit des zweiten Aspekts der Erfindung verschlüsselte Instruktionen eines Programmcodes, dem ein Programmablaufplan zugrunde liegt. Die Entschlüsselungseinheit ist ausgebildet, die verschlüsselten Instruktionen einzeln zu empfangen und eine jeweilige empfangene verschlüsselte Instruktion unter Verwendung des Programm-Datenschlüssels und des Instruktions-Datenschlüssels der betreffenden Vorgängerinstruktion zu entschlüsseln, das so aktuell entschlüsselte mindestens eine Instruktionsdatenwort der Instruktion auszugeben sowie den aktuell entschlüsselten Instruktions-Datenschlüssel zur Verwendung bei der Entschlüsselung der unmittelbar nächsten empfangenen verschlüsselten Instruktion vorzuhalten.

Die Entschlüsselungseinheit ist in bevorzugten Ausführungsformen, wie oben erläutert, ein integrierter Bestandteil eines Krypto-Prozessors des ersten Aspekts der Erfindung. Sie kann jedoch grundsätzlich auch als eine vom Krypto-Prozessor separate Hardware-Einheit produziert werden, die zur Ermöglichung des Betriebs des Krypto-Prozessors mit diesem über eine Schnittstelle zu verbinden ist. Diese Ausführung eignet sich beispielsweise auch für Krypto-Prozessoren, die die über variabel-lange Instruktionen verfügen, deren Länge erst bei der Ausführung erkannt wird. Hier muss die Entschlüsselung entsprechend schrittweise erfolgen.

Nachfolgend werden weitere Aspekte der Erfindung beschrieben. Gemäß einem vierten Aspekt wird ein Betriebsverfahren für eine Verschlüsselungseinheit bereitgestellt, zum Verschlüsseln von Instruktionen eines Programmcodes gemäß einem dem Programmcode zugrundeliegenden Programmablaufplan, wobei das Verfahren umfasst:
- Bereitstellen und Ergänzen empfangener Instruktionen, die jeweils mindestens ein Instruktionsdatenwort aufweisen, um einen der jeweiligen Instruktion zuzuordnenden Instruktions-Datenschlüssel,
- Verschlüsseln einer jeweiligen Instruktion unter Verwendung eines für alle Instruktionen identischen Programm-Datenschlüssels und unter Verwendung des Instruktions-Datenschlüssels der jeweiligen Vorgängerinstruktion, welche gemäß dem Programmablaufplan unmittelbar vorher auszuführen ist, wobei
- nur in dem Fall, dass eine betreffende Instruktion im Programmablaufplan eine Mehrzahl möglicher Vorgängerinstruktionen hat, Zuordnen desselben Instruktions-Datenschlüssels zu den betreffenden möglichen Vorgängerinstruktionen, wobei die jeweiligen Instruktions-Datenschlüssel ansonsten aber instruktions-individuell sind.

Gemäß einem fünften Aspekt der Erfindung wird ein Betriebsverfahren für eine Entschlüsselungseinheit bereitgestellt, zur Entschlüsselung unter Verwendung eines Verfahrens nach des vierten Aspekts verschlüsselter Instruktionen eines Programmcodes, dem ein Programmablaufplan zugrunde liegt, wobei das Verfahren umfasst:
- Empfangen der verschlüsselten Instruktionen, einzeln Instruktion für Instruktion;
- Entschlüsseln einer jeweiligen empfangene verschlüsselten Instruktion unter Verwendung des Programm-Datenschlüssels und des Instruktions-Datenschlüssels der betreffenden Vorgängerinstruktion;
- Vorhalten des aktuell entschlüsselten Instruktions-Datenschlüssels zur Verwendung bei der Entschlüsselung der unmittelbar nächsten empfangenen verschlüsselten Instruktion; und
- Ausgeben des aktuell entschlüsselten mindestens einen Instruktionsdatenworts der Instruktion zur Ausführung durch einen Prozessorkern.

Gemäß einem sechsen Aspekt der Erfindung wird schließlich ein Betriebsverfahren für einen Krypto-Prozessor bereitgestellt, der einen Prozessorkern zur Ausführung von Instruktionen eines Programmcodes aufweist, dem ein Programmablaufplan zugrundeliegt, wobei die Instruktionen jeweils mindestens ein ausführbares Instruktionsdatenwort und einen der jeweiligen Instruktion zugeordneten Instruktions-Datenschlüssel enthalten, wobei das Verfahren umfasst:
- Speichern der Instruktionen in einzeln verschlüsselter Form, wobei eine jeweilige Instruktion unter Verwendung eines Programm-Datenschlüssels und des Instruktions-Datenschlüssels einer jeweiligen Vorgängerinstruktion verschlüsselt ist, welche gemäß dem Programmablaufplan unmittelbar vorher auszuführen ist, und wobei nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind;
- Bereitstellen der gespeicherten verschlüsselten Instruktionen, einzeln Instruktion für Instruktion;
- Entschlüsseln einer jeweiligen empfangenen verschlüsselten Instruktion unter Verwendung des Programm-Datenschlüssels und des Instruktions-Datenschlüssels der betreffenden Vorgängerinstruktion;
- Vorhalten des aktuell entschlüsselten Instruktions-Datenschlüssels zur Verwendung beim Entschlüsseln der unmittelbar nächsten verschlüsselten Instruktion; und
- Empfangen und Ausführen des aktuell entschlüsselten mindestens einen Instruktionsdatenworts durch einen Prozessorkern.

Nachfolgend werden weitere Ausführungsbeispiele der verschiedenen Aspekte der Erfindung unter Bezugnahme auf die Figuren erläutert. Es zeigen:
- Fig. 1: ein vereinfachtes Blockdiagramm eines Ausführungsbeispiels eines Krypto-Prozessors;
- Fig. 2: ein vereinfachtes Blockdiagramm eines weiteren Ausführungsbeispiels eines Krypto-Prozessors;
- Fig. 3: ein vereinfachtes Blockdiagramm eines Ausführungsbeispiels einer Verschlüsselungseinheit;
- Fig. 4: ein vereinfachtes Blockdiagramm eines Ausführungsbeispiels einer Entschlüsselungseinheit;
- Fig. 5: eine Illustration zur Veranschaulichung der Zuordnung von Instruktions-Datenschlüsseln zu Instruktionen unter Bezug auf einen Programmablaufplan;
- Fig. 6: eine weitere Illustration zur Veranschaulichung der Zuordnung von Instruktions-Datenschlüsseln zu Instruktionen unter Bezug auf einen Programmablaufplan; und
- Fig. 7: eine Illustration zur Veranschaulichung eines Beispiel eines Betriebsverfahrens zum Betrieb eines Krypto-Prozessors gemäß der vorliegenden Erfindung.

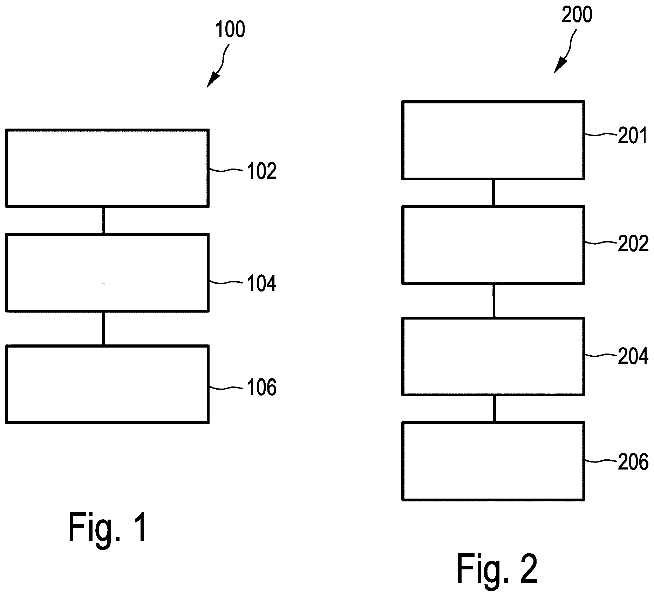

Fig. 1 zeigt ein vereinfachtes Blockdiagramm eines Ausführungsbeispiels eines Krypto-Prozessors 100 mit intrinsischer Code-Authentifizierung. Fig. 1 ist insbesondere dahingehend vereinfacht, dass Schnittstellen des Krypto-Prozessors für den Austausch mit externen Geräten nicht dargestellt sind. Auch ist hier auf Details der dargestellten Einheiten des Krypto-Prozessors verzichtet.

Der Krypto-Prozessor 100 ist als monolithisch integrierte Schaltung ausgebildet. In einer Ausführungsform handelt es sich bei dem Krypto-Prozessor um einen Microcontroller. Microcontroller werden häufig als eingebettetes System in einem typischerweise mobilen elektronischen Anwendungsgerät vorgesehen und müssen dafür eine niedrige Leistungsaufnahme haben. Aktuell verfügbare und eingesetzte Mikrocontroller mit niedriger Leistungsaufnahme verwenden eine einfache von-Neumann- oder Harvard-Architektur mit einem einzigen Adressraum. Mechanismen für die Implementierung von insbesondere sicheren, aber auch zuverlässigen Systemen sind bei dieser Klasse von Mikrocontrollern im Stand der Technik im Wesentlichen nicht vorhanden. Mit der zunehmenden Bedeutung und der allgemeinen Erreichbarkeit von eingebetteten Systemen wächst auch das Bedürfnis an Sicherheit und Zuverlässigkeit für derartige Mikrocontroller. Der Krypto-Prozessor der Fig. 1 zeichnet sich demgegenüber dadurch aus, dass er neben einer an sich bekannten Programmspeichereinheit 102 und einem an sich bekannten Prozessorkern 106 eine Entschlüsselungseinheit 104 aufweist. Diese ist als Hardwareeinheit in den Datenpfad zwischen die Programmspeichereinheit 102 und den Prozessorkern 106 geschaltet. Die Programmspeichereinheit 102 speichert einen Programmcode mit ausführbaren Instruktionen in einzeln verschlüsselter Form speichert. Die Instruktionen enthalten jeweils mindestens ein Instruktionsdatenwort und einen der jeweiligen Instruktion zugeordneten Instruktions-Datenschlüssel.

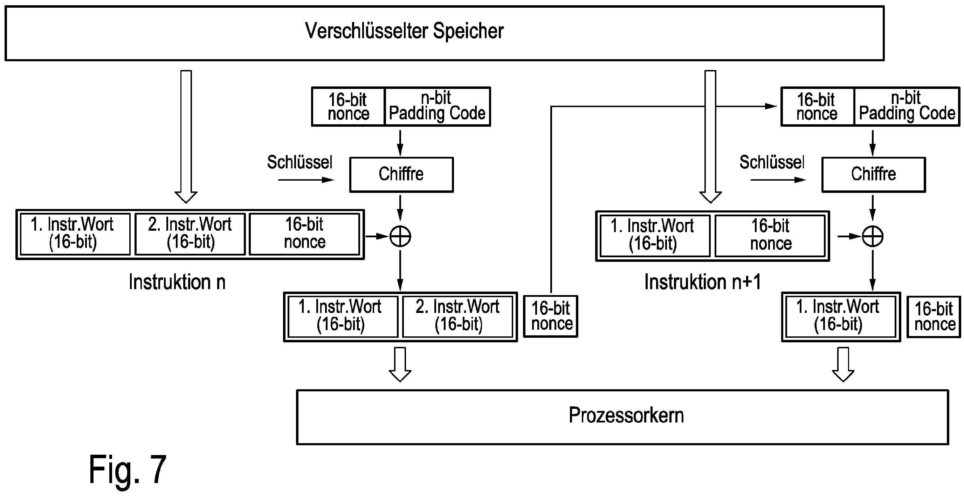

Zur Datenstruktur der Instruktionen wird nun zusätzlich auf die beispielhafte Darstellung zweier Instruktionen, nämlich einer "Instruktion n" und einer "Instruktion n+1" in Fig. 7 Bezug genommen. Die dort schematisch dargestellte "Instruktion n" enthält zwei Instruktions-Datenwörter "Instruktionswort 1" und "Instruktionswort 2" und einen Instruktions-Datenschlüssel in Form eines instruktions-individuellen Nonce. Die in Fig. 7 ebenfalls dargestellte "Instruktion n+1" enthält lediglich ein einziges "Instruktionswort" und zusätzlich ein ebenfalls instruktions-individuelles Nonce. Die Instruktionswörter haben im Krypto-Prozessor der Fig. 1 eine Wortlänge von 16 Bit. Die Länge kann in anderen Krypto-Prozessoren einen anderen Wert haben. Im vorliegenden Fall hat auch das Nonce eine Länge von 16 Bit. Typischerweise hat das Nonce eine der Länge der Instruktions-Datenwörter entsprechende Länger.

Instruktionen solchen Aufbaus liegen also verschlüsselt in der Programmspeichereinheit 102. Dabei ist eine jeweilige Instruktion unter Verwendung eines bei allen Instruktionen des Programmcodes verwendeten Programm-Datenschlüssels und des Instruktions-Datenschlüssels einer jeweiligen Vorgängerinstruktion verschlüsselt, welche gemäß dem Programmablaufplan unmittelbar vorher auszuführen ist. Mit anderen Worten, am Beispiel von Fig. 7: Der Instruktions-Datenschlüssel, der zur Verschlüsselung der "Instruktion n+1" verwendet ist, ist der unverschlüsselte Nonce der "Instruktion n". Nur mit Hilfe des Nonce der "Instruktion n" kann also die "Instruktion n+1" entschlüsselt und somit für den Prozessorkern 106 ausführbar gemacht werden.

Nur in dem Fall, dass eine betreffende Instruktion im Programmablaufplan eine Mehrzahl möglicher Vorgängerinstruktionen hat, ist den betreffenden möglichen Vorgängerinstruktionen derselbe Instruktions-Datenschlüssel zugeordnet. Ansonsten sind jeweiligen Instruktions-Datenschlüssel instruktions-individuell sind.

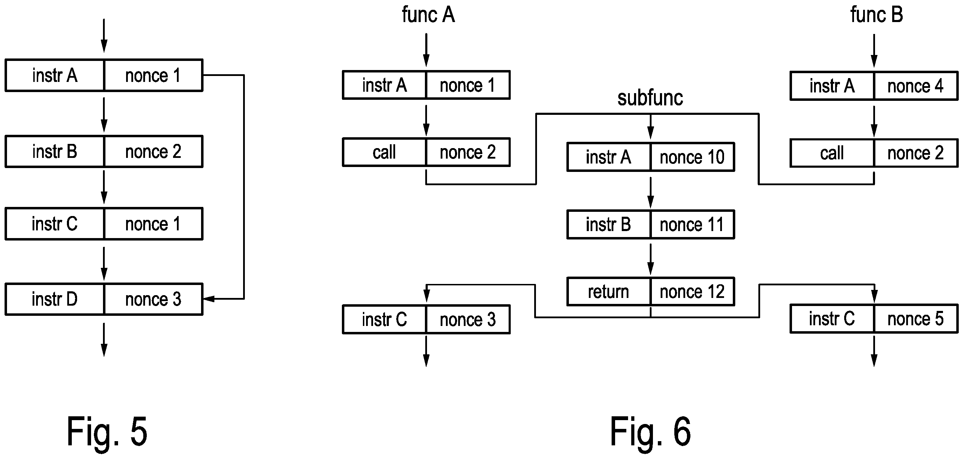

Da ein Programmablauf aufgrund von vorgesehenen Sprüngen und Funktionsaufrufen in der Regel nicht vollständig sequentiell ist, kann eine Instruktion mehr als eine vorangegangene Instruktion haben. Zur Erläuterung dieser Besonderheit der Verschlüsselung des Programmcodes wird nun zusätzlich auf die Figuren 5 und 6 Bezug genommen. Fig. 5 und 6 zeigen jeweils eine Illustration zur Veranschaulichung der Zuordnung von Instruktions-Datenschlüsseln zu Instruktionen unter Bezug auf einen Programmablaufplan In Fig. 5 ist ein Ausschnitt eines Programmablaufplans als eine durch Pfeile symbolisierte Folge von vier Instruktionen A bis D dargestellt. Jede der Instruktionen hat ein Instruktions-Datenwort, gekennzeichnet jeweils mit "instr A" bis "instr D" und ein ihr zugeordnetes Nonce. Die Anordnung der Pfeile zeigt an, dass die Instruktion D zwei mögliche Vorgänger-Instruktionen hat. Zur Instruktion D kann entweder von der Instruktion A aus oder von der Instruktion C her gesprungen werden. Aus diesem Grund ist den beiden Instruktionen A und C als möglichen Vorgängerinstruktionen der Instruktion D derselbe Nonce zugewiesen, welcher mit "nonce 1" gekennzeichnet ist. Auf diese Weise ist sichergestellt, dass die Instruktion D korrekt entschlüsselt werden kann, egal ob sie unmittelbar nach Instruktion A oder unmittelbar nach Instruktion C ausgeführt wird. Ähnlich ist das Bild in Fig. 6, wobei dort jedoch eine mit "subfunc" gekennzeichnete Subfunktion von zwei unterschiedlichen Funktionen "func A" und "func B" aus aufgerufen werden kann. Hierfür weisen beide Funktionen "funcA" und "func B" einen Call-Befahl auf, der jeweils mit demselben Nonce verschlüsselt ist, welcher im Kontext der Fig. 6 als "nonce 2" gekennzeichnet ist. Auf diese Weise ist sichergestellt, dass die erste Instruktion der Subfunktion "subfunc", nämlich die mit "instr A" gekennzeichnete oberste Instruktion im Programmablaufplan, immer mit dem richtigen Instruktions-Datenschlüssel entschlüsselt wird, nämlich mit dem Datenwort "nonce 2", welches auch zur Verschlüsselung der Instruktion "instr A" der Subfunktion "subfunc" verwendet wurde. Alle anderen Instruktionen weisen diese Besonderheit nicht auf, enthalten also einen instruktions-individuellen Instruktions-Datenschlüssel in Form der Nonces "nonce 1" und "nonce 3" bis "nonce 12". Wie also in Fig. 6 2.3 dargestellt, wird bei allen caller-Instruktionen das Nonce für die callee-Instruktion angehangen. Beim Funktionsrücksprung muss die Instruktion nach der caller-Instruktion mit dem Nonce der return-Instruktion des callee verschlüsselt werden. Aufgrund dieser festen Verbindung von caller und callee können dynamische Funktionsaufrufe, wie sie bei Funktionszeigern und Polymorphie verwendet werden, nicht unterstützt werden. Auf beide Konstrukte muss bei der Verwendung der ICA verzichtet werden.

Die nachfolgende Beschreibung wendet sich wieder der Fig. 1 zu, und zwar der Funktionsweise der Entschlüsselungseinheit 104. Die Entschlüsselungseinheit ist ausgebildet, von der Programmspeichereinheit 102 her die verschlüsselten Instruktionen zu empfangen und eine jeweilige empfangene verschlüsselte Instruktion unter Verwendung des instruktions-übergreifenden Programm-Datenschlüssels und des wie erläutert bis auf Ausnahmen instruktions-individuellen Instruktions-Datenschlüssels der betreffenden Vorgängerinstruktion zu entschlüsseln.

Das auf diese Weise aktuell entschlüsselte mindestens eine Instruktionsdatenwort der Instruktion gibt die Entschlüsselungseinheit 104 an den Prozessorkern 106 zur Ausführung der Instruktion aus. Den aktuell entschlüsselten Instruktions-Datenschlüssel hält die Entschlüsselungseinheit 104 zur Verwendung bei der Entschlüsselung der unmittelbar nächsten empfangenen verschlüsselten Instruktion vor. Hierfür verwendet sie beispielsweise einen Zwischenspeicher, etwa ein Register verwenden. Es muss immer nur ein Instruktions-Datenschlüssel vorgehalten werden, nämlich derjenige, welcher zur Entschlüsselung der unmittelbar nachfolgend zu entschlüsselnden Instruktion benötigt wird.

Der Prozessorkern 106 empfängt demnach unverschlüsselte Instruktionsdatenwörter von der Entschlüsselungseinheit 104. Er empfängt nicht die in den verschlüsselten Instruktionen zusätzlich enthalten Instruktions-Datenschlüssel. Die Instruktionsdatenwörter werden im vorliegenden Ausführungsbeispiel Instruktion für Instruktion einzeln empfangen, so dass der Prozessorkern jeweils nur die Datenwörter der aktuell auszuführenden Instruktion empfängt, und das Datenwort oder die Datenwörter der als nächstes auszuführenden Instruktion erst dann, wenn die Ausführung der aktuellen Instruktion bereits begonnen hat. Die Entschlüsselungseinheit 104 ist also vorliegend zusätzlich ausgebildet, die aktuell entschlüsselte Instruktion dem Prozessorkern einzeln zur Ausführung bereitzustellen und eine nächste Instruktion erst dann zu entschlüsseln, nachdem die unmittelbar vorangehend bereitgestellte Instruktion durch den Prozessorkern vollständig dekodiert ist. Der Prozessor hat also die vorangehend bereitgestellte Instruktion dahingehen verarbeitet, dass sein Kontrollwerk eine Operationseinheit, eine Datenquelle und ein Datenziel ausgewählt hat. Die Instruktionen müssen für diese Schritte im Rahmen der Dekodierung also bereits entschlüsselt sein. Mit der beschriebenen einzelnen Bereitstellung der Instruktionen wird der Instruktions-Klartext im Krypto-Prozessor stets auf dem notwendigen Minimum nur einer aktuell auszuführenden Instruktion gehalten.

Mittels der auf diese Weise implementierten "intrinsic code attestation (ICA)" wird ein Auslesen des Programmcodes als auch der Schutz des Systems vor Manipulation gewährleistet. Durch die erläuterte Verschlüsselung des Programmcodes bleibt auch bei einem vollständigen Auslesen der Programmspeichereinheit 102 ein Schutz des in ihr abgelegten Programmcodes aufrechterhalten. Darüber hinaus bietet diese Verschlüsselung einen intrinsischen Schutz gegen return-to-libc Angriffe. Es gelingt also eine Sicherung des Programmcodes gegen nicht autorisiertes Auslesen und gegen ein unerwünschtes Manipulieren des Ausführungspfades.

Die Entschlüsselungseinheit 104 ist wie erläutert fest in den Datenpfad des Krypto-Prozessors 100 integriert. Damit ist sichergestellt, dass sie nicht umgangen werden kann und der Prozessorkern 106 stets nur die im Programmspeicher abgelegten verschlüsselten Instruktionen ausführen kann.

Für die Bestimmung der Instruktions-Datenschlüssel gemäß dem Programmablaufplan muss das zu verschlüsselnde Programm nach dem Übersetzen einer Kontrollflussanalyse unterzogen werden. Diese Analyse kann beispielsweise nach dem Erzeugen eines Zwischencodes durchgeführt werden. Anschließend können die Instruktionen entsprechend mit den ihnen zugeordneten Nonces erweitert und die finale Transformation in einen ISA-spezifischen Maschinencode durchgeführt werden. Die Verschlüsselung wird im Ausführungsbeispiel der Fig. 1 nach dem Erzeugen des Maschinencodes auf einem zum Krypto-Prozessor 100 externen Host-System durchgeführt. Der verschlüsselte Maschinencode wird dann in die Programmspeichereinheit 102 geladen. Diese Schritte erfolgen typischerweise bei einem Hersteller des Krypto-Prozessors selbst oder (in aller Regel) bei einem Hersteller eines Anwendungsgeräts, welches den Krypto-Prozessor enthält.

Fig. 2 zeigt als Alternative zur Ausführungsform der Fig. 1 ein vereinfachtes Blockdiagramm eines weiteren Ausführungsbeispiels eines Krypto-Prozessors 200. Der Krypto-Prozessor 200 unterscheidet sich von dem Krypto-Prozessor 100 der Fig. 1 insbesondere darin, dass er eine Verschlüsselungseinheit 201 integriert. Ansonsten sind wie im Ausführungsbeispiel der Fig. 1 eine Programmspeichereinheit 202, eine Entschlüsselungseinheit 204 und ein Prozessorkern 206 enthalten. Ihre Funktionalität entspricht der anhand von Fig. 1 erläuterten Funktionsweise der entsprechenden Einheiten des Krypto-Prozessors 100. Die Verschlüsselungseinheit 201 des Krypto-Prozessors 200 ist ausgebildet, in unverschlüsselter Form empfangene Instruktionen, die jeweils mindestens ein Instruktionsdatenwort aufweisen, um einen der jeweiligen Instruktion zuzuordnenden Instruktions-Datenschlüssel zu ergänzen und eine jeweilige Instruktion unter Verwendung des Programm-Datenschlüssels und des Instruktions-Datenschlüssels der jeweiligen Vorgänger-instruktion zu verschlüsseln, welche gemäß dem Programmablaufplan unmittelbar vorher auszuführen ist. Wie bereits anhand von Fig. 5 und 6 erläutert wird dabei nur in dem Fall, dass eine betreffende Instruktion im Programmablaufplan eine Mehrzahl möglicher Vorgängerinstruktionen hat, den betreffenden möglichen Vorgängerinstruktionen derselben Instruktions-Datenschlüssel zugeordnet, und sind die jeweiligen Instruktions-Datenschlüssel ansonsten instruktions-individuell. Die Verschlüsselungseinheit ist weiterhin ausgebildet, die so verschlüsselten Instruktionen an die Programmspeichereinheit 202 auszugeben, welche sie abspeichert.

Die Verschlüsselung erfolgt also beim Krypto-Prozessor 200 nach dem Einspielen des Programmtextes auf dem Krypto-Prozessor 200 selbst.

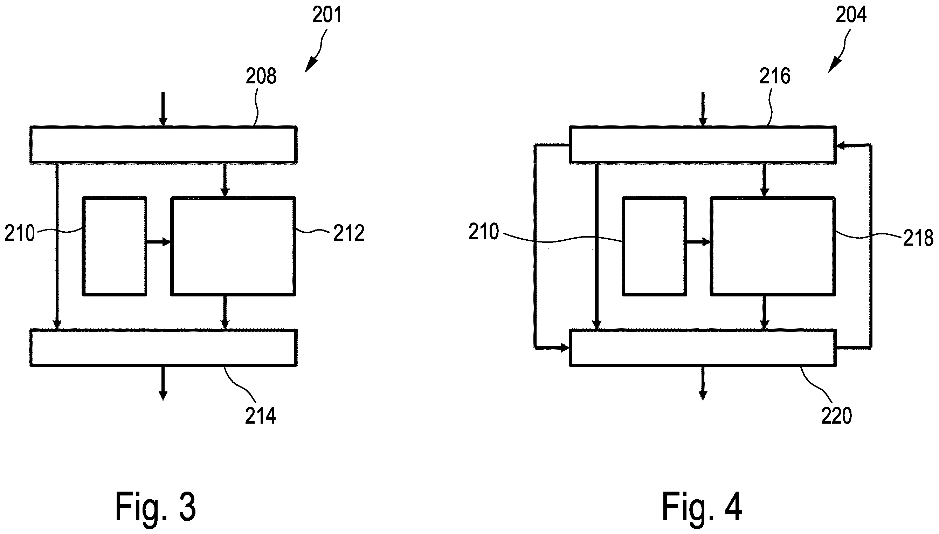

Anhand von Fig. 3 wird nachfolgend ein Ausführungsbeispiel einer Verschlüsselungseinheit erläutert. Fig. 3 zeigt ein vereinfachtes Blockdiagramm eines Ausführungsbeispiels der Verschlüsselungseinheit 201, wie sie im Krypto-Prozessor 200 Verwendung finden kann. Die Verschlüsselungseinheit 201 empfängt in einer Eingangsstufe 208 unverschlüsselten Programmcode in Form von Instruktions-Datenwörtern individueller Instruktionen. Die Länge der Instruktionen wird durch die Instruction-Set-Architektur des Prozessors festgelegt Pro Instruktion können also in manchen Ausführungsformen nur ein Datenwort oder in anderen Ausführungsformen mindestens zwei Instruktions-Datenwörter vorliegen. Die Eingangsstufe 208 ergänzt die empfangenen Instruktions-Datenwörter um jeweilige Instruktions-Datenschlüssel gemäß der oben insbesondere anhand von Fig. 5 und 6 beschriebenen grundsätzlich instruktions-individuellen, jedoch mit definierten Ausnahmen versehenen Zuordnungsvorschrift.

Ein Programm-Datenschlüssel wird durch einen nicht-klonbaren integrierten Schaltungsteil 210 als so genannte Physically Unclonable Function (PUF) bereitgestellt. Derartige prozessorindividuelle Schaltungsteile sind an sich bekannt, weswegen hier auf eine nähere Beschreibung des Schaltungsteils 210 verzichtet werden kann. Es sei jedoch erwähnt, dass eine PUF nur auf Krypto-Prozessoren Anwendung findet, die die Verschlüsselungseinheit integriert enthalten. Für die Nutzung eines PUF muss der Programmtext also vor dem Ablegen im Speicher lokal verschlüsselt werden. Die Nutzung eines PUF hat den Vorteil, dass ein Programm-Image nicht ohne vorherige Umschlüsselung auf ein anderes System übertragen werden kann.

Ist wie im Beispiel der Fig. 1 keine Verschlüsselungseinheit im Krypto-Prozessor enthalten, werden andere an sich bekannte Methoden der Erzeugung und zugriffssicheren Ablage des Programm-Datenschlüssels im Krypto-Prozessor verwendet.

Zur Implementierung einer Blockverschlüsselungseinheit enthält die Verschlüsselungseinheit 201 weiterhin eine symmetrische Chiffre 212, welche ausgebildet ist, den empfangenen unverschlüsselten Programmcode in Form von Instruktions-Datenwörtern zu empfangen und die Instruktionsdatenwörter individuell unter Verwendung des Programm-Datenschlüssels und des jeweiligen Instruktions-Datenschlüssels per Blockverschlüsselung im Counter-Betriebsmodus stromzuverschlüsseln. Symmetrische Chiffren sind im Allgemeinen sehr effizient und bieten ein hohes Maß an Sicherheit. Allerdings verarbeiten diese Chiffren nur Blöcke einer festen Größe. Die Instruktionen sind in den meisten Systemen nicht mit dieser Blockgröße in Übereinstimmung. Eine der Verschlüsselung zugrundeliegende Blocklänge ist vorliegend also (jedoch nicht notwendigerweise) kleiner oder größer als eine Instruktionslänge der Instruktionen.

Der Instruktions-Datenschlüssel als solcher ist wie bereits erläutert sinnvollerweise kürzer als die Blocklänge der Chiffre. Zur Kompensation im Falle einer Blocklänge, die größer ist als die Länge des Instruktions-Datenschlüssels, enthält die Eingangsstufe 208 eine in Fig. 3 nicht näher dargestellte Paddingstufe, die ausgebildet ist, den jeweils erzeugten Instruktions-Datenschlüssel mittels eines vorbestimmten Padding-Codes auf die vorgegebene Blocklänge zu erweitern.

Zur stromverschlüsselten Blockverschlüsselung im Counter-Betriebsmodus von Instruktionen, die insgesamt einschließlich der Länge des Instruktions-Datenschlüssels größer als die Blocklänge der Chiffre sind, wird neben dem Programm-Datenschlüssel der jeweilige Instruktions-Datenschlüssel der Vorgängerinstruktion gemäß dem Programmablaufplan mit dem jeweiligen Padding-Code zur Erzeugung eines Zwischen-Datenschlüssels in der symmetrischen Chiffre 212 herangezogen. Dabei werden zur Erstellung des Zwischen-Datenschlüssels mit passender Länge mehrere von der Chiffre erzeugte Blöcke und nötigenfalls ein Teilabschnitt eines letzten Blocks aneinandergehängt, bis die Länge bitgenau passt. Jeder der Blöcke enthält den jeweiligen Instruktions-Datenschlüssel und den jeweiligen Padding-Code. Die Padding-Codes aufeinanderfolgender Blöcke unterscheiden sich in einer Implementierung nur dadurch, dass der Padding-Code von Block zu Block inkrementiert ist.

Dieser Zwischen-Datenschlüssel wird anschließend an eine Addiererstufe 214 ausgegeben. Die Addiererstufe 214 erzeugt durch Addition (entsprechend einer XOR-Operation) des Zwischen-Datenschlüssels mit dem von der Eingangsstufe 208 her empfangenen, um den Instruktions-Datenschlüssel der Vorgänger-Instruktion und den Padding-Code erweiterten Instruktionsdatenwörtern jeweils eine verschlüsselte Instruktion zur Ablage in der Programmspeichereinheit des Krypto-Prozessors.

Anhand von Fig. 4 wird nachfolgend ein Ausführungsbeispiel einer Entschlüsselungseinheit erläutert. Fig. 4 zeigt ein vereinfachtes Blockdiagramm eines Ausführungsbeispiels der Entschlüsselungseinheit 204, wie sie im Krypto-Prozessors 200 Verwendung finden kann.

Die jeweiligen von der Entschlüsselungseinheit 202 empfangenen Instruktionen sind unter Verwendung des Programm-Datenschlüssels und des jeweiligen Instruktions-Datenschlüssels durch eine verschlüsselungsseitige symmetrische Chiffre blockverschlüsselt, wie eben anhand von Fig. 3 erläutert wurde. Die Entschlüsselungseinheit 204 enthält eine Eingangsstufe 216 und eine der Chiffre der Verschlüsselungseinheit entsprechende symmetrische Chiffre 218. Die Eingangsstufe empfängt die aktuell zu entschlüsselnde Instruktion von der Programmspeichereinheit 202, vgl. Fig. 2. Sie empfängt weiterhin einen entschlüsselten Instruktions-Datenschlüssel von einer Ausgangsstufe 220. Die Eingangsstufe enthält eine Padding-Stufe, wie sie auch in der der Verschlüsselungseinheit vorgesehen ist. Die Padding-Stufe erweitert den Instruktions-Datenschlüssel um den Padding-Code, der aufgrund der Vorschrift zur Erzeugung des Padding-Codes identisch zum Verschlüsselungsprozess für die jeweilige Instruktion erzeugt wird. Nur wenn die Gesamtlänge der Instruktionsdatenwörter und des Instruktions-Datenschlüssels der Instruktionen größer als die Blockgröße der symmetrischen Chiffre 218 ist, wird ein Cipher-Strom erzeugt (Counter-Mode).

Mit Hilfe des um den Padding-Code erweiterten Instruktions-Datenschlüssels der Vorgängerinstruktion und des von dem nicht-klonbaren Schaltungsteil 210 bereitgestellten Programm-Datenschlüssels erzeugt die symmetrische Chiffre 218 in gleicher Weise wie die symmetrische Chiffre 212 einen Zwischen-Datenschlüssel, der einer Ausgangsstufe 220 zugeführt wird. Diese enthält eine Addierstufe, welche mit Hilfe des so erzeugten Zwischen-Datenschlüssels die aktuell zu entschlüsselnde Instruktion, welche ihr eingangsseitig ebenfalls zugeführt wird, durch Summenbildung (entsprechend einer XOR-Operation) entschlüsselt. Anschließend trennt die Ausgangsstufe den entschlüsselten Instruktions-Datenschlüssel ab und stellt ihn der Eingangsstufe 216 bereit, um die Entschlüsselung der nächsten Instruktion zu ermöglichen. Die Addition kann bitweise erfolgen. So kann die Entschlüsselung des mindestens einen Instruktions-Datenworts und des Instruktions-Datenschlüssels schrittweise durchgeführt werden.

Fig. 7 zeigt eine Illustration zur Veranschaulichung eines Beispiels eines Betriebsverfahrens zum Betrieb eines Krypto-Prozessors gemäß der vorliegenden Erfindung.

Bei dem hier dargestellten ICA-Ansatz werden die einzelnen Instruktionen, wie die bereits näher erläuterten Instruktionen "Instruktion n" und "Instruktion n+1" des Programmtextes derart verschlüsselt, dass eine Instruktion nur dann verwendet werden kann, wenn die ihr vorangestellte Instruktion unmittelbar zuvor entschlüsselt und somit ausgeführt wurde.

Zur Verhinderung der einführend erwähnten return-to-libc Angriffe wird mittels der ICA sichergestellt, dass der Programmpfad bei seiner Ausführung nicht verlassen werden kann. Hierbei wird sichergestellt, dass die Instruktion n + 1 nur da ausgeführt werden kann, wenn zuvor die Instruktion n ausgeführt wurde. Es wird also eine Verknüpfung der Instruktionen eingeführt. Diese kryptographische Verknüpfung der Instruktionen erzeugt eine Abhängigkeit, die eine Nachprüfbarkeit der korrekten Reihenfolge der Programmtextblöcke als intrinsische Eigenschaft des Prozessorkerns ergibt. Beim Verlassen des vorgegebenen Programmpfades werden dem Prozessorkern zwangsläufig fehlerhaft entschlüsselte Instruktionen übergeben, die dann nicht ausgeführt werden können.

Jede Instruktion wird im Beispiel der Fig. 7 um einen Nonce erweitert, welches als Eingang für die Entschlüsselung der nachfolgenden Instruktion verwendet wird. Das Nonce wird jeweils zusammen mit der vorangegangenen Instruktion verschlüsselt. Jede Instruktion wird mit einem zufälligen eindeutigen Nonce erweitert. Das Nonce muss eine kryptographisch hinreichende Länge haben, so dass keine Kollisionen entstehen. Abhängig vom Prozessor kann die Länge des Nonce kleiner oder größer sein. In einer 16-bit Prozessorarchitektur sollte beispielsweise ein 16-bit Nonce ausreichend sein, da hiermit jeder Adresse ein anderer Nonce zugewiesen werden könnte. Die Nonces haben keine Relation zur Adresse der Instruktion und müssen zufällig erzeugt werden, so dass eine Vorhersage ohne die Kenntnis des Schlüssels nicht möglich ist.

Die Block-Chiffre wird auch im Beispiel der Fig. 7 im Counter-Modus betrieben. Hierbei wird als Eingabe für die Chiffre das Nonce genutzt. Das Nonce wird mittels eines Counters auf die Blockgröße der Blockchiffre erweitert. Der Counter wird mit der Adresse der Instruktion initialisiert. Zur Entschlüsselung der Instruktion wird das Ergebnis der Chiffre mit dem Programmtext addiert (z.B. Addition Modulo 2). Damit ist die ICA nicht an die Blockgröße eines Blockciphers gebunden und kann auch bei instruction set architectures (ISAs) mit unterschiedlich langen Instruktionen verwendet werden.

Zusammenfassend sind gemäß der vorliegenden Erfindung die einzelnen Instruktionen des Programmcodes derart verschlüsselt, dass eine Instruktion nur dann vom Prozessorkern verwendet werden kann, wenn die ihr vorangestellte Instruktion, hier als Vorgänger-instruktion bezeichnet, unmittelbar zuvor ausgeführt wurde. Dies erfordert erfindungsgemäß, dass die Vorgängerinstruktion zunächst entschlüsselt wurde und damit der in ihr enthaltene Instruktions-Datenschlüssel zur Entschlüsselung der aktuellen Instruktion bereitsteht. Diese kryptographische Verknüpfung der Instruktionen erzeugt eine Abhängigkeit, die dem Prozessorkern eine intrinsische Fähigkeit zur Nachprüfung der korrekten Ausführungsreihenfolge der Instruktionen gemäß dem erwünschten Programmablaufplan verleiht, der dem Programmcode zugrundeliegt.

## Patentansprüche

1. Krypto-Prozessor, umfassend
- einen Prozessorkern zum Empfang und zur Ausführung von Instruktionen eines Programmcodes, dem ein Programmablaufplan zugrundeliegt;
- eine Programmspeichereinheit, die den Programmcode mit Instruktionen in einzeln verschlüsselter Form speichert, wobei
- die Instruktionen jeweils mindestens ein Instruktionsdatenwort und einen der jeweiligen Instruktion zugeordneten Instruktions-Datenschlüssel enthalten,
- eine jeweilige Instruktion unter Verwendung eines für alle Instruktionen identischen Programm-Datenschlüssels und des Instruktions-Datenschlüssels einer jeweiligen Vorgängerinstruktion verschlüsselt ist, welche gemäß dem Programmablaufplan unmittelbar vorher auszuführen ist, und wobei
- nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind; und
- eine Entschlüsselungseinheit, die ausgebildet ist, von der Programmspeichereinheit her die verschlüsselten Instruktionen zu empfangen und eine jeweilige empfangene verschlüsselte Instruktion unter Verwendung des Programm-Datenschlüssels und des Instruktions-Datenschlüssels der betreffenden Vorgängerinstruktion zu entschlüsseln, das so aktuell entschlüsselte mindestens eine Instruktionsdatenwort der Instruktion dem Prozessorkern zur Ausführung der Instruktion zuzuführen sowie den so aktuell entschlüsselten Instruktions-Datenschlüssel zur Verwendung bei der Entschlüsselung der unmittelbar nächsten empfangenen verschlüsselten Instruktion vorzuhalten.

2. Krypto-Prozessor nach Anspruch 1, bei dem die Entschlüsselungseinheit ausgebildet ist, die aktuell entschlüsselte Instruktion dem Prozessorkern einzeln zur Ausführung bereitzustellen und eine nächste Instruktion erst dann zu entschlüsseln, nachdem die unmittelbar vorangehend bereitgestellte Instruktion durch den Prozessorkern vollständig dekodiert ist.

3. Krypto-Prozessor nach Anspruch 1 oder 2, bei dem der jeweilige Instruktions-Datenschlüssel ein der Instruktion zugeordnetes Nonce ist.

4. Krypto-Prozessor nach einem der vorstehenden Ansprüche, bei dem
- die jeweilige Instruktion unter Verwendung des Programm-Datenschlüssels und des jeweiligen Instruktions-Datenschlüssels durch eine verschlüsselungsseitige symmetrische Chiffre blockverschlüsselt ist, und
- die Entschlüsselungseinheit eine Blockentschlüsselungsstufe mit einer entschlüsselungsseitigen symmetrischen Chiffre enthält, die ausgebildet ist, den Programm-Datenschlüssel und den jeweiligen Instruktions-Datenschlüssel der Vorgängerinstruktion zu empfangen und damit einen Zwischen-Datenschlüssel zur Entschlüsselung der aktuell zu entschlüsselnden Instruktion bereitzustellen.

5. Krypto-Prozessor nach Anspruch 4, bei dem
- die Entschlüsselungseinheit zusätzlich eine Paddingstufe aufweist, die ausgebildet ist, den jeweils empfangenen Instruktions-Datenschlüssel mittels des vorbestimmten Padding-Codes auf die Blocklänge zu erweitern.

6. Krypto-Prozessor nach Anspruch 4 oder 5, bei dem die Entschlüsselungseinheit eine Additionsstufe aufweist, die ausgebildet ist, den Zwischen-Datenschlüssel und die zu entschlüsselnde Instruktion in binärer Form zu empfangen und zu addieren und unter Verwendung des Ergebnisses der Addition das mindestens eine Instruktionsdatenwort und den Instruktions-Datenschlüssel in entschlüsselter Form bereitzustellen.

7. Krypto-Prozessor nach einem der vorstehenden Ansprüche, zusätzlich umfassend eine Verschlüsselungseinheit, die ausgebildet ist,
- die Instruktionen, die jeweils mindestens ein Instruktionsdatenwort und den der jeweiligen Instruktion zugeordneten Instruktions-Datenschlüssel aufweisen, zu empfangen,
- eine jeweilige Instruktion unter Verwendung des Programm-Datenschlüssels und des Instruktions-Datenschlüssels der jeweiligen Vorgängerinstruktion zu verschlüsseln, welche gemäß dem Programmablaufplan unmittelbar vorher auszuführen ist.

8. Krypto-Prozessor nach Anspruch 5 und Anspruch 7, bei dem
- die Verschlüsselungseinheit eine Blockverschlüsselungseinheit mit einer verschlüsselungsseitigen symmetrischen Chiffre enthält, welche ausgebildet ist, unverschlüsselten Programmcode in Form von Instruktionen zu empfangen und die Instruktionen individuell unter Verwendung des Programm-Datenschlüssels und des jeweiligen Instruktions-Datenschlüssels zu verschlüsseln
- die Verschlüsselungseinheit zusätzlich eine Paddingstufe aufweist, die ausgebildet ist, den jeweils empfangenen Instruktions-Datenschlüssel mittels eines vorbestimmten jeweiligen Padding-Codes auf die Blocklänge zu erweitern, wobei
- die Blockverschlüsselungseinheit ausgebildet ist, die Instruktionen in einem Counter-Betriebsmodus stromverschlüsselt zu verschlüsseln, und hierfür unter Verwendung des Programm-Datenschlüssels, des jeweiligen Instruktions-Datenschlüssels der Vorgängerinstruktion gemäß dem Programmablaufplan sowie unter Verwendung des jeweiligen Padding-Codes einen Zwischen-Datenschlüssel zu erzeugen.

9. Krypto-Prozessor nach mindestens einem der vorstehenden Ansprüche, bei dem die Entschlüsselungseinheit als Hardwareeinheit unumgehbar in einem Datenpfad zwischen der Programmspeichereinheit und dem Prozessorkern angeordnet ist.

10. Krypto-Prozessor nach Anspruch 9, der
- einen nicht-klonbaren integrierten Schaltungsteil aufweist, welcher messbare, zeitlich konstante und zufällige Parameterwerte definiert, und bei dem
- Datenwerte des Programm-Datenschlüssels von den zufälligen Parameterwerten des nicht-klonbaren integrierten Schaltungsteils abhängen.

11. Verschlüsselungseinheit für Instruktionen eines Programmcodes, dem ein Programmablaufplan zugrundeliegt, wobei die Verschlüsselungseinheit ausgebildet ist,
- empfangene Instruktionen, die jeweils mindestens ein Instruktionsdatenwort aufweisen, um einen der jeweiligen Instruktion zuzuordnenden Instruktions-Datenschlüssel zu ergänzen,
- eine jeweilige Instruktion unter Verwendung eines für alle Instruktionen identischen Programm-Datenschlüssels und des Instruktions-Datenschlüssels der jeweiligen Vorgängerinstruktion zu verschlüsseln, welche gemäß dem Programmablaufplan unmittelbar vorher auszuführen ist, und
- nur in dem Fall, dass eine betreffende Instruktion im Programmablaufplan eine Mehrzahl möglicher Vorgängerinstruktionen hat, den betreffenden möglichen Vorgänger-instruktionen denselben Instruktions-Datenschlüssel zuzuordnen, wobei die jeweiligen Instruktions-Datenschlüssel ansonsten aber instruktions-individuell sind.

12. Verschlüsselungseinheit nach Anspruch 11, die
- eine Blockverschlüsselungseinheit mit einer symmetrischen Chiffre enthält, welche ausgebildet ist, unverschlüsselten Programmcode in Form von Instruktionen zu empfangen und die Instruktionen individuell unter Verwendung des Programm-Datenschlüssels und des jeweiligen Instruktions-Datenschlüssels zu verschlüsseln
- eine Padding-Stufe aufweist, die ausgebildet ist, den jeweils empfangenen Instruktions-Datenschlüssel mittels eines vorbestimmten Padding-Codes auf die Blocklänge zu erweitern, wobei
- die Blockverschlüsselungseinheit ausgebildet ist, die Instruktionen jeweils in einem Counter-Betriebsmodus stromverschlüsselt zu verschlüsseln und hierfür unter Verwendung des Programm-Datenschlüssels, des jeweiligen Instruktions-Datenschlüssels der Vorgängerinstruktion gemäß dem Programmablaufplan sowie unter Verwendung des jeweiligen Padding-Codes einen Zwischen-Datenschlüssel zu erzeugen.

13. Entschlüsselungseinheit für unter Verwendung einer Verschlüsselungseinheit nach Anspruch 11 verschlüsselte Instruktionen eines Programmcodes, dem ein Programmablaufplan zugrunde liegt, wobei
- die Entschlüsselungseinheit ausgebildet ist, die verschlüsselten Instruktionen einzeln zu empfangen und eine jeweilige empfangene verschlüsselte Instruktion unter Verwendung des für alle Instruktionen identischen Programm-Datenschlüssels und des Instruktions-Datenschlüssels der betreffenden Vorgängerinstruktion zu entschlüsseln, das so aktuell entschlüsselte mindestens eine Instruktionsdatenwort der Instruktion auszugeben sowie den aktuell entschlüsselten Instruktions-Datenschlüssel zur Verwendung bei der Entschlüsselung der unmittelbar nächsten empfangenen verschlüsselten Instruktion vorzuhalten, wobei nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind.

14. Betriebsverfahren für eine Verschlüsselungseinheit zum Verschlüsseln von Instruktionen eines Programmcodes gemäß einem dem Programmcode zugrundeliegenden Programmablaufplan, wobei das Verfahren umfasst,
- Bereitstellen und Ergänzen empfangener Instruktionen, die jeweils mindestens ein Instruktionsdatenwort aufweisen, um einen der jeweiligen Instruktion zuzuordnenden Instruktions-Datenschlüssel,
- Verschlüsseln einer jeweiligen Instruktion unter Verwendung eines für alle Instruktionen identischen Programm-Datenschlüssels und unter Verwendung des Instruktions-Datenschlüssels der jeweiligen Vorgängerinstruktion, welche gemäß dem Programmablaufplan unmittelbar vorher auszuführen ist, wobei
- nur in dem Fall, dass eine betreffende Instruktion im Programmablaufplan eine Mehrzahl möglicher Vorgängerinstruktionen hat, Zuordnen desselben Instruktions-Datenschlüssels zu den betreffenden möglichen Vorgängerinstruktionen, wobei die jeweiligen Instruktions-Datenschlüssel ansonsten aber instruktions-individuell sind.

15. Betriebsverfahren für eine Entschlüsselungseinheit zur Entschlüsselung unter Verwendung eines Verfahrens nach Anspruch 14 verschlüsselter Instruktionen eines Programmcodes, dem ein Programmablaufplan zugrunde liegt, wobei das Verfahren umfasst:
- Empfangen der verschlüsselten Instruktionen, einzeln Instruktion für Instruktion;
- Entschlüsseln einer jeweiligen empfangenen verschlüsselten Instruktion unter Verwendung des für alle Instruktionen identischen Programm-Datenschlüssels und des Instruktions-Datenschlüssels der betreffenden Vorgängerinstruktion,
- Vorzuhalten des aktuell entschlüsselten Instruktions-Datenschlüssels zur Verwendung bei der Entschlüsselung der unmittelbar nächsten empfangenen verschlüsselten Instruktion;
- Ausgeben des aktuell entschlüsselten mindestens einen Instruktionsdatenworts der Instruktion zur Ausführung durch einen Prozessorkern, wobei nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind.

16. Betriebsverfahren für einen Krypto-Prozessor, der einen Prozessorkern zur Ausführung von Instruktionen eines Programmcodes aufweist, dem ein Programmablaufplan zugrundeliegt, wobei die Instruktionen jeweils mindestens ein ausführbares Instruktions-datenwort und einen der jeweiligen Instruktion zugeordneten Instruktions-Datenschlüssel enthalten,
wobei das Verfahren umfasst:
- Speichern der Instruktionen in einzeln verschlüsselter Form, wobei eine jeweilige Instruktion unter Verwendung eines für alle Instruktionen identischen Programm-Datenschlüssels und des Instruktions-Datenschlüssels einer jeweiligen Vorgängerinstruktion verschlüsselt ist, welche gemäß dem Programmablaufplan unmittelbar vorher auszuführen ist, und wobei nur in dem Fall, dass eine betreffende Instruktion im Programmablaufplan eine Mehrzahl möglicher Vorgängerinstruktionen hat, den betreffenden möglichen Vorgängerinstruktionen derselbe Instruktions-Datenschlüssel zugeordnet ist, die jeweiligen Instruktions-Datenschlüssel ansonsten aber instruktions-individuell sind;
- Bereitstellen der gespeicherten verschlüsselten Instruktionen, einzeln Instruktion für Instruktion;
- Entschlüsseln einer jeweiligen empfangenen verschlüsselten Instruktion unter Verwendung des Programm-Datenschlüssels und des Instruktions-Datenschlüssels der betreffenden Vorgängerinstruktion;
- Vorhalten des aktuell entschlüsselten Instruktions-Datenschlüssels zur Verwendung beim Entschlüsseln der unmittelbar nächsten verschlüsselten Instruktion; und
- Empfangen und Ausführen des aktuell entschlüsselten mindestens einen Instruktionsdatenworts durch einen Prozessorkern.

## Claims

1. Cryptoprocessor, comprising
- a processor core for receiving and executing instructions of a program code which is based on a program flow chart;
- a program storage unit, which stores the program code with instructions in individually encrypted form, wherein
- the instructions contain in each case at least one instruction data word and one instruction data key assigned to the respective instruction,
- a respective instruction is encrypted using a program data key which is identical for all instructions and the instruction data key of the respective preceding instruction, which is to be executed immediately beforehand according to the program flow chart, and wherein
- only in the case that a relevant instruction in the program flow chart has a plurality of possible preceding instructions, the same instruction data key is assigned to the relevant possible preceding instructions, the respective instruction data keys being otherwise unique to the instruction, however; and
- a decrypting unit which is configured to receive from the program storage unit the encrypted instructions and to decrypt a respective received encrypted instruction by using the program data key and the instruction data key of the relevant preceding instruction, to supply the at least one currently thus decrypted instruction data word to the processor core for executing the instruction, as well as to retain the currently thus decrypted instruction data key for use in the decryption of the immediately next received encrypted instruction.

2. Cryptoprocessor according to claim 1, in which the decrypting unit is configured to provide the currently decrypted instruction individually to the processor core to be executed, and to decrypt a next instruction only after the instruction provided immediately beforehand has been completely decoded by the processor core.

3. Cryptoprocessor according to claim 1 or 2, in which the respective instruction data key is a nonce assigned to the instruction.

4. Cryptoprocessor according to any of the preceding claims, in which
- the respective instruction is block-encrypted by using the program data key and the respective instruction data key by means of a symmetrical cipher on the encryption side, and
- the decrypting unit contains a block decrypting stage with a symmetrical cipher on the decryption side, which is configured to receive the program data key and the respective instruction data key of the preceding instruction and therewith to provide an intermediate data key for decrypting the instruction currently to be decrypted.

5. Cryptoprocessor according to claim 4, in which
- the decrypting unit has additionally a padding stage which is configured to extend the respectively received instruction data key to the block length by means of the predetermined padding code.

6. Cryptoprocessor according to claim 4 or 5, in which the decrypting unit has an addition stage which is configured to receive the intermediate data key and the instruction to be decrypted in binary form and to add them and to provide the at least one instruction data word and the instruction data key in decrypted form by using the result of the addition.

7. Cryptoprocessor according to any of the preceding claims, additionally comprising an encrypting unit, which is configured
- to receive the instructions, which have in each case at least one instruction data word and the instruction data key assigned to the respective instruction,
- to encrypt a respective instruction by using the program data key and the instruction data key of the respective preceding instruction, which is to be executed immediately beforehand according to the program flow chart.

8. Cryptoprocessor according to claim 5 and claim 7, in which
- the encrypting unit contains a block encrypting unit with a symmetrical cipher on the encrypting side, which is configured to receive non-encrypted program code in the form of instructions and to encrypt the instructions individually by using the program data key and the respective instruction data key
- the encrypting unit has additionally a padding stage, which is configured to extend the respectively received instruction data key to the block length by means of a predetermined respective padding code, wherein
- the block encrypting unit is configured to stream-encrypt the instructions in a counter operation mode, and to that end to generate an intermediate data key by using the program data key, the respective instruction data key of the preceding instruction according to the program flow chart and by using the respective padding code.

9. Cryptoprocessor according to any of the preceding claims, in which the decrypting unit is arranged as a hardware unit which cannot be circumvented in a data path between the program storage unit and the processor core.

10. Cryptoprocessor according to claim 9, which
- has a non-clonable integrated circuit section which defines measurable, temporally constant and random parameter values, and in which
- data values of the program data key depend on the random parameter values of the non-clonable integrated circuit section.

11. Encrypting unit for instructions of a program code which is based on a program flow chart, wherein the encrypting unit is configured
- to supplement received instructions, which have in each case at least one instruction data word, with an instruction data key which is to be assigned to the respective instruction,
- to encrypt a respective instruction by using a program data key which is identical for all instructions and the instruction data key of the respective preceding instruction which is to be executed immediately beforehand according to the program flow chart, and
- only in the case that a relevant instruction in the program flow chart has a plurality of possible preceding instructions, to assign to the relevant possible preceding instructions the same instruction data key, the respective instruction data keys being otherwise unique to the instruction, however.

12. Encrypting unit according to claim 11, which
- contains a block encrypting unit having a symmetrical cipher, which is configured to receive non-encrypted program code in the form of instructions and to encrypt instructions individually by using the program data key and the respective instruction data key
- has a padding stage, which is configured to extend the respectively received instruction data key to the block length by means of a predetermined padding code, wherein
- the block encrypting unit is configured to stream-encrypt the instructions respectively in a counter operation mode and to that end to generate an intermediate data key by using the program data key, the respective instruction data key of the preceding instruction according to the program flow chart and by using the respective padding code.

13. Decrypting unit for instructions encrypted, by using an encrypting unit according to claim 11, of a program code which is based on a program flow chart, wherein
- the decrypting unit is configured to receive individually the encrypted instructions and to decrypt a respective received decrypted instruction by using the program data key which is identical for all instructions and the instruction data key of the relevant preceding instruction, to output the thus currently decrypted at least one instruction data word of the instruction and to retain the currently decrypted instruction data key for use in the decryption of the immediately next received encrypted instruction, wherein only in the case that a relevant instruction in the program flow chart has a plurality of possible preceding instructions, the same instruction data key is assigned to the relevant possible preceding instruction, the respective instruction data keys being otherwise unique to the instruction.

14. Operational method for an encrypting unit for encrypting instructions of a program code according to a program flow chart upon which the program code is based, wherein the method comprises
- providing and supplementing received instructions, which have in each case at least one instruction data word, with an instruction data key to be assigned to the respective instruction,
- encrypting a respective instruction by using a program data key which is identical for all instructions and by using the instruction data key of the respective preceding instruction which is to be executed immediately beforehand according to the program flow chart, wherein
- only in the case that a relevant instruction in the program flow chart has a plurality of possible preceding instructions, assigning the same instruction data key to the relevant possible preceding instructions, wherein the respective instruction data keys are, however, otherwise unique to the instruction.

15. Operational method for a decrypting unit for decrypting instructions, encrypted by using a method according to claim 14, of a program code which is based on a program flow chart, wherein the method comprises:
- receiving the encrypted instructions individually instruction by instruction;
- decrypting a respectively received encrypted instruction by using the program data key which is identical for all instructions and the instruction data key of the relevant preceding instruction,
- retaining the currently decrypted instruction data key for use when decrypting the immediately next received encrypted instruction;
- outputting the currently decrypted at least one instruction data word of the instruction for execution by a processor core, wherein only in the case that a relevant instruction in the program flow chart has a plurality of possible preceding instructions, the same instruction data key is assigned to the relevant possible preceding instructions, the respective instruction data key being, however, otherwise unique to the instruction.

16. Operational method for a cryptoprocessor, which has a processor core for executing instructions of a program code which is based on a program flow chart, wherein the instructions contain in each case at least one executable instruction data word and one instruction data key assigned to the respective instruction,
wherein the method comprises:
- storing the instructions in individually encrypted form, wherein a respective instruction is encrypted by using a program data key which is identical for all instructions and the instruction data key of a respective preceding instruction which is to be executed immediately beforehand according to the program flow chart, and wherein only in the case that a relevant instruction in the program flow chart has a plurality of possible preceding instructions, the same instruction data key is assigned to the relevant possible preceding instructions, the respective instruction data keys being, however, otherwise unique to the instruction;
- providing the stored encrypted instructions, individually instruction by instruction;
- decrypting a respective received encrypted instruction by using the program data key and the instruction data key of the relevant preceding instruction;
- retaining the currently decrypted instruction data key for use when decrypting the immediately next encrypted instruction; and
- receiving and executing the currently decrypted at least one instruction data word by a processor core.

## Revendications

1. Cryptoprocesseur comprenant
- un noyau de processeur pour la réception et pour l'exécution d'instructions d'un code de programme, sur lequel est basé un plan de déroulement de programme ;
- une unité de mémoire de programme qui enregistre le code de programme avec des instructions sous une forme chiffrée individuellement, dans lequel
- les instructions contiennent chacune au moins un mot de données d'instruction et une clé de données d'instruction correspondant à l'instruction respective,
- une instruction respective est chiffrée à l'aide d'une clé de données d'instruction de programme et de la clé de données d'instruction, identiques pour toutes les instructions, d'une d'instruction précédente respective, qui doit être exécutée immédiatement avant selon le plan de déroulement de programme et dans lequel
- uniquement dans le cas où une instruction concernée dans le plan de déroulement du programme comprend une pluralité d'instructions précédentes possibles, aux instructions précédentes concernées possibles correspond la même clé de données d'instruction, les clés de données d'instructions étant sinon spécifiques aux instructions ; et
- une unité de déchiffrement qui est conçue pour recevoir, en provenance de l'unité de mémoire de programme, les instructions chiffrées et pour déchiffrer une instruction chiffrée reçue respective à l'aide de la clé de données de programme et de la clé de données d'instruction de l'instruction précédente concernée, d'introduire l'au moins un mot de données d'instruction de l'instruction ainsi actuellement déchiffré dans le noyau de processeur pour l'exécution de l'instruction ainsi que pour conserver la clé de données d'instruction ainsi actuellement déchiffrée pour une utilisation lors du déchiffrement de l'instruction chiffrée reçue immédiatement après.

2. Cryptoprocesseur selon la revendication 1, dans lequel l'unité de déchiffrement est conçue pour mettre à disposition l'instruction actuellement déchiffrée au noyau de processeur de manière individuelle pour l'exécution et de ne déchiffrer une instruction suivante qu'après que l'instruction mise à disposition immédiatement avant n'ait été décodé entièrement par le noyau de processeur.

3. Cryptoprocesseur selon la revendication 1 ou 2, dans lequel la clé de données d'instruction respective est un nonce correspondant à l'instruction.

4. Cryptoprocesseur selon l'une des revendications précédentes, dans lequel
- l'instruction respective est chiffrée par blocs à l'aide de la clé de données du programme et de la clé de données d'instruction respective par un chiffre symétrique côté chiffrement et
- l'unité de déchiffrement contient un étage de déchiffrement par blocs avec un chiffre symétrique côté déchiffrement, qui est conçue pour recevoir la clé de données du programme et la clé de données d'instruction respective de l'instruction précédente et pour mettre ainsi à disposition une clé de données intermédiaire pour le déchiffrement de l'instruction à déchiffrer actuellement.

5. Cryptoprocesseur selon la revendication 4, dans lequel
- l'unité de déchiffrement comprend en outre un étage de remplissage qui est conçu pour élargir à la longueur du bloc la clé de données d'instruction reçue au moyen du code de remplissage prédéterminé.

6. Cryptoprocesseur selon la revendication 4 ou 5, dans lequel l'unité de déchiffrement comprend un étage d'addition qui est conçu pour recevoir la clé de données intermédiaire et l'instruction à déchiffrer sous forme binaire et pour les additionner et à l'aide du résultat de l'addition, pour mettre à disposition un mot de données d'instruction et la clé de données d'instruction sous forme déchiffrée.

7. Cryptoprocesseur selon l'une des revendications précédentes, comprenant en outre une unité de chiffrement qui est conçue
- pour recevoir les instructions, qui comprennent chacune au moins un mot de données d'instruction et la clé de données d'instructions correspondant à l'instruction respective,
- pour chiffrer une instruction respective à l'aide de la clé de données de programme et de la clé de données d'instruction de l'instruction précédente respective, qui doit être exécutée immédiatement avant selon le plan de déroulement du programme.

8. Cryptoprocesseur selon la revendication 5 et la revendication 7, dans lequel
- l'unité de chiffrement contient une unité de chiffrement par blocs avec un chiffre symétrique côté chiffrement, qui est conçue pour recevoir un code de programme non chiffré sous la forme d'instructions et pour chiffrer les instructions individuellement à l'aide de la clé de données de programme et de la clé de données d'instruction respective
- l'unité de chiffrement comprend en outre un étage de remplissage qui est conçu pour élargir à la longueur du bloc la clé de données d'instruction reçue au moyen d'un code de remplissage prédéterminé, dans lequel
- l'unité de chiffrement par blocs est conçue pour chiffrer les instructions avec chiffrement du flux dans un mode de fonctionnement de compteur, et pour générer, pour cela, à l'aide de la clé de données de programme, de la clé de données d'instruction respective de l'instruction précédente selon le plan de déroulement du programme ainsi qu'à l'aide du code de remplissage respectif, une clé de données intermédiaire.

9. Cryptoprocesseur selon au moins l'une des revendications précédentes, dans lequel l'unité de déchiffrement est disposée de manière incontournable, sous la forme d'une unité matérielle, dans un chemin de données entre l'unité de mémoire de programme et le noyau du processeur.

10. Cryptoprocesseur selon la revendication 9,
- qui comprend une partie de circuit intégré non clonable qui définit des valeurs de paramètres mesurables, constants dans le temps et aléatoires et dans lequel
- les valeurs de données de la clé de données de programme dépendent des valeurs de paramètres aléatoires de la partie de circuit intégré non clonable.

11. Unité de chiffrement pour des instructions d'un code de programme, sur lequel est basé un plan de déroulement du programme, dans lequel l'unité de chiffrement est conçue
- pour compléter les instructions reçues, qui comprennent chacune au moins un mot de données d'instruction, à l'aide d'une clé de données d'instructions à attribuer à l'instruction respective,
- pour chiffrer une instruction respective à l'aide d'une clé de données de programme identique pour toutes les instructions et de la clé de données d'instruction de l'instruction précédente respective, qui doit être exécutée immédiatement avant selon le plan de déroulement du programme et
- uniquement dans le cas où une instruction concernée dans le plan de déroulement du programme comprend une pluralité d'instructions précédentes possibles, pour attribuer aux instructions précédentes possibles concernées la même clé de données d'instruction, dans lequel les clés de données d'instructions sont sinon spécifiques aux instructions.

12. Unité de chiffrement selon la revendication 11,
- qui contient une unité de chiffrement par blocs avec un chiffre symétrique, qui est conçue pour recevoir un code de programme non chiffré sous la forme d'instructions et pour chiffrer les instructions individuellement à l'aide de la clé de données de programme et de la clé de données d'instruction respective
- qui comprend un étage de remplissage qui est conçu pour élargir à la longueur du bloc la clé de données d'instruction reçue au moyen d'un code de remplissage prédéterminé, dans lequel
- l'unité de chiffrement par blocs est conçue pour chiffrer avec chiffrement du flux les instructions chacune dans un mode de fonctionnement de compteur et pour générer, pour cela, à l'aide de la clé de données de programme, de la clé de données d'instruction respective de l'instruction précédente selon le plan de déroulement du programme ainsi qu'à l'aide du code de remplissage respectif, une clé de données intermédiaire.

13. Unité de déchiffrement pour des instructions, chiffrées à l'aide d'une unité de chiffrement selon la revendication 11, d'un code de programme sur lequel est basé un plan de déroulement de programme, dans lequel
- l'unité de déchiffrement est conçue pour recevoir les instructions chiffrées individuellement et pour déchiffrer une instruction chiffrée reçue respective à l'aide de la clé de données de programme identique pour toutes les instructions et de la clé de données d'instruction de l'instruction précédente concernée, pour émettre l'au moins mot de données d'instruction de l'instruction, ainsi actuellement déchiffré, ainsi que pour conserver la clé de données d'instruction actuellement déchiffrée pour une utilisation lors du déchiffrement de l'instruction chiffrée reçue immédiatement après, dans lequel, uniquement dans le cas où une instruction concernée dans le plan de déroulement du programme comprend une pluralité d'instructions précédentes possibles, aux instructions précédentes possibles concernées est attribuée la même clé de données d'instruction, les clés de données d'instructions étant sinon spécifiques aux instructions.

14. Procédé de fonctionnement pour une unité de chiffrement pour le chiffrement d'instructions d'un code de programme selon un plan de déroulement de programme basé sur le code de programme, dans lequel le procédé comprend :
- la mise à disposition et la complétion d'instructions reçues, qui comprennent chacune au moins un mot de données d'instructions, avec une clé de données d'instruction à attribuer à l'instruction respective,
- le chiffrement d'une instruction respective à l'aide d'une clé de données de programme identique pour toutes les instructions et à l'aide de la clé de données d'instruction de l'instruction précédente respective, qui doit être exécutée immédiatement avant selon le plan de déroulement du programme, dans lequel
- uniquement dans le cas où une instruction concernée dans le plan de déroulement du programme comprend une pluralité d'instructions précédentes possibles, l'attribution de la même clé de données d'instruction aux instructions précédentes possibles concernées, les clés de données d'instructions étant sinon spécifiques aux instructions.

15. Procédé de fonctionnement pour une unité de déchiffrement pour le déchiffrement d'instructions, chiffrées à l'aide d'un procédé selon la revendication 14, d'un code de programme sur lequel est basé un plan de déroulement du programme, dans lequel le procédé comprend :
- la réception des instructions chiffrées, individuellement instruction par instruction ;
- le déchiffrement des instructions chiffrées reçues respective à l'aide de la clé de données de programme identique pour toutes les instructions et de la clé de données d'instruction de l'instruction précédente concernée,
- la conservation de la clé de données d'instruction actuellement déchiffrée pour une utilisation lors du déchiffrement de l'instruction chiffrée reçue immédiatement après ;
- l'émission de l'au moins un mot de données d'instruction actuellement déchiffré de l'instruction pour l'exécution par un noyau de processeur, dans lequel, uniquement dans le cas où une instruction concernée dans le plan de déroulement du programme comprend une pluralité d'instructions précédentes possibles, aux instructions précédentes possibles concernées est attribuée la même clé de données d'instruction, les clés de données d'instructions étant sinon spécifiques aux instructions.

16. Procédé de fonctionnement pour un cryptoprocesseur, qui comprend un noyau de processeur pour l'exécution d'instructions d'un code de programme, sur lequel est basé un plan de déroulement du programme, dans lequel les instructions contiennent chacune au moins un mot de données d'instruction exécutable et une clé de données d'instruction correspondant à l'instruction respective,
dans lequel le procédé comprend :
- l'enregistrement des instructions sous une forme chiffrée individuellement, dans lequel une instruction respective est chiffrée à l'aide d'une clé de données de programme identique pour toutes les instructions et de la clé de données d'instruction d'une instruction précédente respective, qui doit être exécutée immédiatement avant selon le plan de déroulement du programme et dans lequel, uniquement dans le cas où une instruction concernée dans le plan de déroulement du programme comprend une pluralité d'instructions précédentes possibles, aux instructions précédentes possibles concernées est attribuée la même clé de données d'instruction, les clés de données d'instructions étant sinon spécifiques aux instructions ;
- la mise à disposition des instructions chiffrées enregistrées, individuellement instruction par instruction ;
- le déchiffrement d'une instruction chiffrée reçue respective à l'aide de la clé de données de programme et de la clé de données d'instruction de l'instruction précédentes concernée ;
- conservation de la clé de données d'instruction actuellement déchiffrée pour une utilisation lors du déchiffrement de l'instruction chiffrée immédiatement après ; et
- réception et exécution de l'au moins un mot de données d'instruction actuellement déchiffré par un noyau de processeur.
